(19) Europäisches Patentamt
European Patent Office
Office européen des brevets

(11) EP 3 565 253 A1

(12) EUROPEAN PATENT APPLICATION

(43) Date of publication:
06.11.2019 Bulletin 2019/45

(51) Int Cl.:
H04N 19/597 (2014.01)    H04N 19/507 (2014.01)

(21) Application number: 18305564.9

(22) Date of filing: 04.05.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: InterDigital CE Patent Holdings
75017 Paris (FR)

(72) Inventors:
• SABATER, Neus
35576 CESSON-SÉVIGNÉ (FR)
• DOYEN, Didier
35576 CESSON-SÉVIGNÉ (FR)
• BOISSON, Guillaume
35576 CESSON-SÉVIGNÉ (FR)

(74) Representative: Huchet, Anne et al
InterDigital CE Patent Holdings
20, rue Rouget de Lisle
92130 Issy-les-Moulineaux (FR)

(54) **A METHOD AND AN APPARATUS FOR REDUCING AN AMOUNT OF DATA REPRESENTATIVE OF A MULTI-VIEW PLUS DEPTH CONTENT**

(57)    The present disclosure relates to multi-view plus depth contents. When considering multi-view acquisition, the amount of data representing the content is huge and comprises a lot of redundancies. The 3D-HEVC standard considers the whole set of data and compresses redundant information. Thus, the amount of data representing a multi-view plus depth content, though compressed, remains huge. The proposed method consists in removing pixels in a multi-view plus depth content which are redundant since they are not providing any new information.

$$X'w = Pn' * Zu'v' * Kn'^{-1} (u',v')$$

$$Xw = Pn * Zuv * Kn^{-1} (u,v)$$

**Fig. 2**

**Description**

TECHNICAL FIELD

The present disclosure relates to multi-view plus depth contents. More particularly, the disclosure aims at reducing the amount of effective data contained in a multi-view plus depth content.

BACKGROUND

A camera array or a plenoptic camera can capture a scene from different viewpoints. When considering multi-view acquisition, the amount of data representing the content is huge and comprises a lot of redundancies.

Compression schemes for multi-view plus depth content exist for content delivery. The 3D-HEVC extension of the MPEG HEVC standard allows a global compression of the multi-view plus depth content including the use of depth information in the prediction loop. The 3D-HEVC standard considers the whole set of data and compresses redundant information.

Thus, the amount of data representing a multi-view plus depth content, though compressed, remains huge.

The present disclosure has been devised with the foregoing in mind.

SUMMARY OF INVENTION

The proposed method consists in removing pixels in a multi-view plus depth content which are redundant since they are not providing any new information. To be considered as redundant a pixel shall have at the same time similar RGB values and depth value. The present invention proposes a method to determine if a given pixel of one view is redundant with another one in another view.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

**Figure 1** is a flowchart of a method for reducing redundancies in a multi-view plus depth content according to an embodiment,
**Figure 2** represents how a pixel P(u,v) is de-projected in the world coordinate system, how the point Pw is re-projected in the projection view Vp and how the projection pixel Pp(u',v')$_1$ is de-projected from the projection view Vp into the world coordinate system,
**Figure 3** is a schematic block diagram illustrating an example of a device capable of executing the method of the disclosure.

DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

In an embodiment, a multi-view plus depth content is acquired by a 4x4 camera rig. In another embodiment, the multi-view plus depth content may be acquired by a plenoptic camera. In both embodiments, the cameras are calibrated intrinsically and extrinsically using for example Sparse Bundle Adjustment. In case the multi-view plus depth content is acquired by the camera rig, the cameras of the camera rig are calibrated, for example, to fit a distorted pinhole projection model.

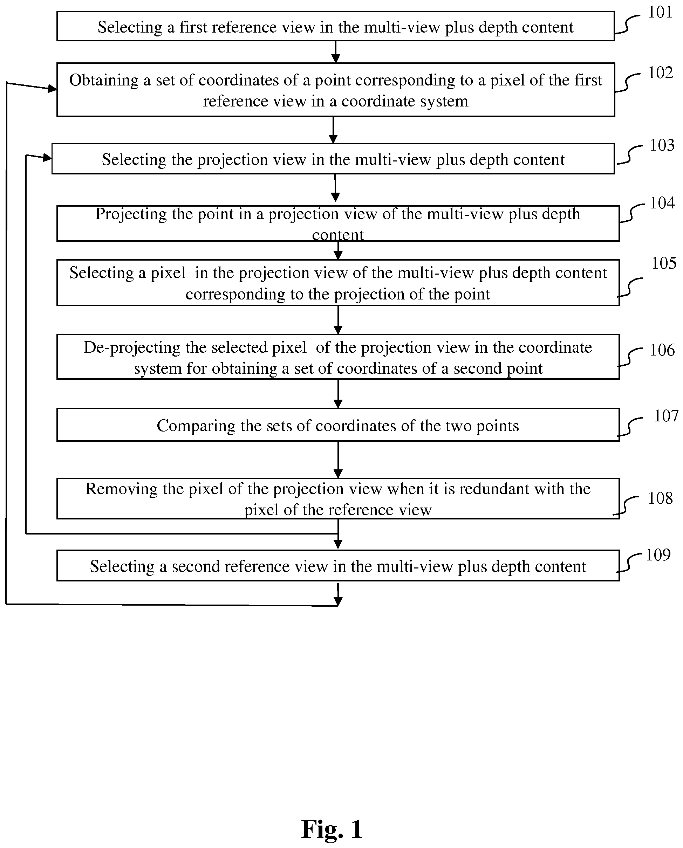

**Figure 1** is a flowchart of a method for reducing redundancies in a multi-view plus depth content according to an embodiment. Such a method may be executed, for example, in a camera, a smartphone, or any other device capable of processing a multi-view plus depth content. The multi-view plus depth content comprises n views, each view being acquired by one of the $C_N$ cameras constituting the camera rig.

In a step 101, a first reference view V1 is selected from the n views of the multi-view plus depth content. For example, the first reference view V1 corresponds to a view acquired by a camera $C_1$ located on the top left of the camera rig. In an embodiment where the multi-view plus depth content is acquired by a plenoptic camera, the reference view V1 is selected among the views of the matrix of views calculated from the lenslet content. Each of the n views of the multi-view plus depth content comprises P pixels of coordinates (u,v).

In a step 102, a set of coordinates (Xw), in a coordinate system such as the world coordinate system, of a point Pw corresponding to a pixel P1(u,v) of the first reference view V1, is obtained. The set of coordinates (Xw) is obtained using a pose matrix, the inverse intrinsic matrix of the camera $C_1$ from which the reference view V1 is acquired, and the depth associated to the pixel (Zuv) of the first reference view V1.

Considering a camera $C_1$ of the camera rig, $\mathbf{P} = (\mathbf{R} \quad \mathbf{T}) \in \mathbb{R}_{3 \times 4}$ is the pose matrix of the camera C in the world coordinate system, and $\mathbf{Q} = (\mathbf{R}^{-1} \quad -\mathbf{R}^{-1} \cdot \mathbf{T}) \in \mathbb{R}_{3 \times 4}$ is its extrinsic matrix.

$$K = \begin{pmatrix} f & \gamma & c_u \\ 0 & \alpha.f & c_v \\ 0 & 0 & 1 \end{pmatrix}$$

Let be the intrinsic matrix of the camera $C_1$; where $f$ is the distance from the optical center to the sensor expressed in pixels, $\begin{pmatrix} c_u \\ c_v \end{pmatrix}$ is the principal point.

Now, if $\mathbf{X}_w$ is a 3D point in the world coordinate system and X denotes the corresponding pixel in the coordinate system of the camera $C_1$, then, $\mathbf{X}_w = \mathbf{P} \cdot \begin{pmatrix} \mathbf{X} \\ 1 \end{pmatrix}$ and X = $\mathbf{Q} \cdot \begin{pmatrix} \mathbf{X}_w \\ 1 \end{pmatrix}$.

Then, given a 3D point $\mathbf{X}_w$ in the world coordinate system, its projection in pixel coordinates $\begin{pmatrix} u \\ v \end{pmatrix}$ in the camera $C_1$ image plane is determined by

$$\begin{pmatrix} u \\ v \\ 1 \end{pmatrix} = \mathbf{K} \cdot \left( W \begin{pmatrix} s \\ t \end{pmatrix} \\ 1 \right)$$

where $\begin{pmatrix} s \\ t \\ 1 \end{pmatrix} \equiv \mathbf{Q} \cdot \begin{pmatrix} \mathbf{X}_w \\ 1 \end{pmatrix}$ and $W: \mathbb{R}^2 \to \mathbb{R}^2$ denotes the distortion warping operator, defined in the plane z = 1$m$.

$$\begin{pmatrix} s \\ t \\ 1 \end{pmatrix} \equiv \begin{pmatrix} x \\ y \\ z \end{pmatrix} \Leftrightarrow \begin{cases} s = \frac{x}{z} \\ t = \frac{y}{z} \end{cases}$$

Note that, using the homogeneous coordinates:

A given point in pixel coordinates $\begin{pmatrix} u \\ v \end{pmatrix}$ in the camera $C_1$ image plane is de-projected in the world coordinate

system $\mathbf{X}_w$

$$\mathbf{X}_w = \mathbf{P}_c \cdot \left( \begin{array}{c} z_{uv} \cdot \left( \begin{array}{c} \mathbf{W}_c^{-1} \begin{pmatrix} s \\ t \end{pmatrix} \\ 1 \end{array} \right) \\ 1 \end{array} \right) \text{ where } \begin{pmatrix} s \\ t \\ 1 \end{pmatrix} = \mathbf{K}_c^{-1} \begin{pmatrix} u \\ v \\ 1 \end{pmatrix}$$

In a step 103, the projection view Vp is defined among the set of n views of the multi-view plus depth content different from the first reference view V1.

In a step 104, knowing the coordinates (Xw) of the first point Pw in the world coordinate system, a pixel Pproj(up, vp) in the projection view Vp of the multi-view plus depth content is obtained using the intrinsic matrix and the Q matrix of the camera $C_2$ from which the projection view Vp is acquired. The projection of the point Pw may not correspond to an actual pixel of the projection view Vp but most probably in between a plurality of pixels of the projection view Vp.

In a step 105, a projection pixel Pp(u',v') in the projection view Vp is selected which is the one that reduces the distance between the result of the projection Pproj(up, vp) of the point Pw in the projection view Vp and one of the neighboring pixels:

  ∘ Pproj1 (int(up), int(vp))
  ∘ Pproj2 (int(up)+1, int(vp))
  ∘ Pproj3 (int(up), int(vp)+1)
  ∘ Pproj4 (int(up) +1, int(vp)+1)

In an embodiment, the distance is calculated as the square root of the sum of square difference between coordinates.

In a step 106, the projection pixel Pp(u',v') is de-projected in the world coordinate system as in step 102 but using matrix of the camera $C_2$. In other words, a set of coordinates (X'w) of a second point P'w in the world coordinate system is obtained which corresponds to the pixel Pp(u',v').

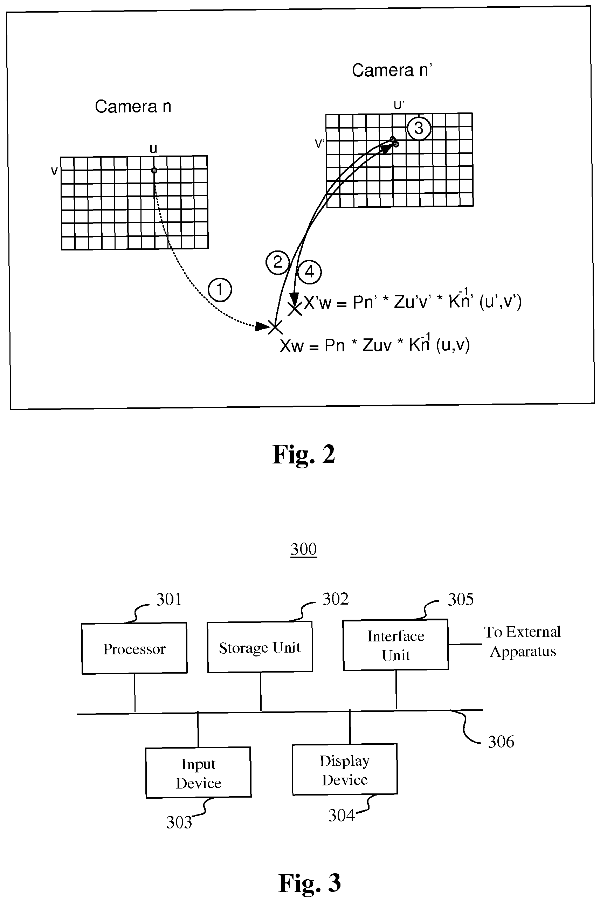

**Figure 2** represents how a pixel P(u,v) is de-projected in the world coordinate system, how the point Pw is re-projected in the projection view Vp and how the projection pixel Pp(u',v')$_1$ is de-projected from the projection view Vp into the world coordinate system. On figure 2, camera $C_1$ is the camera which acquired the reference view V1 and camera $C_2$ is the camera which acquired the projection view Vp.

In a step 107, the sets of coordinates (Xw) and (X'w) of the first point Pw and the second point P'w are compared. In an embodiment, if the square root of the sum of square distance between each component of coordinates (Xw) and (X'w) is below a threshold, the two points Pw and P'w, and consequently the two corresponding pixels P(u,v) in the reference view V1 and Pp(u',v') in the projection view Vp, are considered as redundant.

A similar comparison is applied on a parameter representative of the colors associated with the pixels P1(u,v) and Pp(u',v') . The difference between the two parameters representative of a color of the pixels P1(u,v) and Pp(u',v') may be expressed as sum of square difference for each component (e.g. R, G and B). In an embodiment it may be the sum of absolute values of the three differences. The parameters representative of the color of a pixel may be RGB values or in any other color reference system (e.g. Lab, ...).

In a step 108, since the second pixel Pp(u',v') is redundant with the first pixel P1(u,v) of the reference view V1, the second pixel Pp(u',v') is removed from the projection view Vp.

Steps 104 to 108 are executed for the pixel P1 (u,v) of the first reference view V1 in all the remaining views of the multi-view plus depth content except the reference view V1.

Once steps 104 to 108 are executed for the pixel P1(u,v) of the first reference view V1 in all the remaining views of the multi-view plus depth content, steps 102 to 108 are executed for the other pixels of the reference view V1.

When all the pixels of the reference view V1 are processed during steps 102 to 108, a new reference view V2 is selected in a step 109. The new reference view is selected among the remaining views of multi-view plus depth content in which pixels which are redundant with pixels of the first reference view V1 are removed.

When all the pixels of the new reference view V2 are processed during steps 102 to 108, a third reference view V3 is selected in step 109. The third reference view is selected among the remaining views of multi-view plus depth content in which pixels which are redundant with pixels of the second reference view V2 are removed.

Step 109 is executed until all the n views of the multi-view plus depth content are processed..

**Figure 3** is a schematic block diagram illustrating an example of a device capable of executing the method described in reference to figure 1. Such a device may be a camera, a camera rig, a smartphone, etc.

The apparatus 300 comprises a processor 301, a storage unit 302, an input device 303, a display device 304, and an interface unit 305 which are connected by a bus 306. Of course, constituent elements of the apparatus 300 may be connected by a connection other than a bus connection.

The processor 301 controls operations of the apparatus 300. The storage unit 302 stores at least one program to be executed by the processor 301, and various data such as a multi-view plus depth content, parameters used by computations performed by the processor 301, intermediate data of computations performed by the processor 301, and so on. The processor 301 may be formed by any known and suitable hardware, or software, or a combination of hardware and software. For example, the processor 301 may be formed by dedicated hardware such as a processing circuit, or by a programmable processing unit such as a CPU (Central Processing Unit) that executes a program stored in a memory thereof.

The storage unit 302 may be formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform the method as described with reference to figure 1.

The input device 303 may be formed by a keyboard, a pointing device such as a mouse, or the like for use by the user to input commands, etc. The output device 304 may be formed by a display device to display, for example, a Graphical User Interface (GUI). The input device 303 and the output device 304 may be formed integrally by a touchscreen panel, for example.

The interface unit 305 provides an interface between the apparatus 300 and an external apparatus. The interface unit 305 may be communicable with the external apparatus via cable or wireless communication.

A method for reducing an amount of data representative of a multi-view plus depth content, said method comprising:

a) selecting a reference view in said multi-view plus depth content,
b) obtaining a first parameter representative of a color as well as a first set of coordinates of a first point corresponding to a pixel in said reference view when said first pixel is projected in a coordinate system,
c) obtaining a second parameter representative of a color as well as a second set of coordinates of a second point corresponding to a pixel of another view of said multi-view plus depth content when said pixel is projected said coordinate system, said pixel in said other view corresponding to a projection of said first point in said other view,
d) removing said pixel in said other view when the first parameter representative of a color as well as the first set of coordinates of the first point corresponds to the second parameter representative of a color as well as the second set of coordinates of the second point.

An apparatus capable of reducing an amount of data representative of a multi-view plus depth content, said apparatus comprising at least a processor configured to :

a) select a reference view in said multi-view plus depth content,
b) obtain a first parameter representative of a color as well as a first set of coordinates of a first point corresponding to a pixel in said reference view when said first pixel is projected in a coordinate system,
c) obtain a second parameter representative of a color as well as a second set of coordinates of a second point corresponding to a pixel of another view of said multi-view plus depth content when said pixel is projected said coordinate system, said pixel in said other view corresponding to a projection of said first point in said other view,
d) remove said pixel in said other view when the first parameter representative of a color as well as the first set of coordinates of the first point corresponds to the second parameter representative of a color as well as the second set of coordinates of the second point.

The method and the apparatus wherein the obtaining b), the obtaining c) and the removing d) are performed for all the pixels of the reference view.

The method and the apparatus wherein the obtaining c) and the removing d) are performed for all the views of the multi-view plus depth content.

The method and the apparatus comprising selecting a second reference view in the multi-view plus depth content on which the removing d) was performed, the method and the apparatus further comprising:

e) obtaining a third parameter representative of a color as well as a third set of coordinates of a third point corresponding to a pixel in said second reference view when said pixel is projected in said coordinate system,
f) obtaining a fourth parameter representative of a color as well as a fourth set of coordinates of a fourth point corresponding to a pixel of another view of said multi-view plus depth content on which the removing d) was performed when said pixel is projected said coordinate system, said pixel in said other view corresponding to a projection of said third point in said other view,

g) removing said pixel in said other view when the third parameter representative of a color as well as the third set of coordinates of the third point corresponds to the fourth parameter representative of a color as well as the fourth set of coordinates of the fourth point.

A computer program characterized in that it comprises program code instructions for the implementation of the method according to claim 1 when the program is executed by a processor.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A method for reducing an amount of data representative of a multi-view plus depth content, said method comprising:

   a) selecting a reference view in said multi-view plus depth content,
   b) obtaining a first parameter representative of a color as well as a first set of coordinates of a first point corresponding to a pixel in said reference view when said first pixel is projected in a coordinate system,
   c) obtaining a second parameter representative of a color as well as a second set of coordinates of a second point corresponding to a pixel of another view of said multi-view plus depth content when said pixel is projected said coordinate system, said pixel in said other view corresponding to a projection of said first point in said other view,
   d) removing said pixel in said other view when the first parameter representative of a color as well as the first set of coordinates of the first point corresponds to the second parameter representative of a color as well as the second set of coordinates of the second point.

2. An apparatus capable of reducing an amount of data representative of a multi-view plus depth content, said apparatus comprising at least a processor configured to:

   a) select a reference view in said multi-view plus depth content,
   b) obtain a first parameter representative of a color as well as a first set of coordinates of a first point corresponding to a pixel in said reference view when said first pixel is projected in a coordinate system,
   c) obtain a second parameter representative of a color as well as a second set of coordinates of a second point corresponding to a pixel of another view of said multi-view plus depth content when said pixel is projected said coordinate system, said pixel in said other view corresponding to a projection of said first point in said other view,
   d) remove said pixel in said other view when the first parameter representative of a color as well as the first set of coordinates of the first point corresponds to the second parameter representative of a color as well as the second set of coordinates of the second point.

3. The method and the apparatus according to claims 1 and 2 wherein the obtaining b), the obtaining c) and the removing d) are performed for all the pixels of the reference view.

4. The method and the apparatus according to claim 3 wherein the obtaining c) and the removing d) are performed for all the views of the multi-view plus depth content.

5. The method and the apparatus according to claim 4 comprising selecting a second reference view in the multi-view plus depth content on which the removing d) was performed, the method and the apparatus further comprising:

   e) obtaining a third parameter representative of a color as well as a third set of coordinates of a third point corresponding to a pixel in said second reference view when said pixel is projected in said coordinate system,
   f) obtaining a fourth parameter representative of a color as well as a fourth set of coordinates of a fourth point corresponding to a pixel of another view of said multi-view plus depth content on which the removing d) was performed when said pixel is projected said coordinate system, said pixel in said other view corresponding to a projection of said third point in said other view,

g) removing said pixel in said other view when the third parameter representative of a color as well as the third set of coordinates of the third point corresponds to the fourth parameter representative of a color as well as the fourth set of coordinates of the fourth point.

6. A computer program **characterized in that** it comprises program code instructions for the implementation of the method according to claim 1 when the program is executed by a processor.

Selecting a first reference view in the multi-view plus depth content ⌐ 101

Obtaining a set of coordinates of a point corresponding to a pixel of the first reference view in a coordinate system ⌐ 102

Selecting the projection view in the multi-view plus depth content ⌐ 103

Projecting the point in a projection view of the multi-view plus depth content ⌐ 104

Selecting a pixel in the projection view of the multi-view plus depth content corresponding to the projection of the point ⌐ 105

De-projecting the selected pixel of the projection view in the coordinate system for obtaining a set of coordinates of a second point ⌐ 106

Comparing the sets of coordinates of the two points ⌐ 107

Removing the pixel of the projection view when it is redundant with the pixel of the reference view ⌐ 108

Selecting a second reference view in the multi-view plus depth content ⌐ 109

# Fig. 1

**Fig. 2**

$$X'w = Pn' * Zu'v' * Kn'^{-1} (u',v')$$

$$Xw = Pn * Zuv * Kn^{-1} (u,v)$$

<u>300</u>

**Fig. 3**

Europäisches
Patentamt

European
Patent Office

Office européen
des brevets

**EUROPEAN SEARCH REPORT**

Application Number

EP 18 30 5564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIRAN NANJUNDA IYER ET AL: "Multiview video coding using depth based 3D warping", MULTIMEDIA AND EXPO (ICME), 2010 IEEE INTERNATIONAL CONFERENCE ON, IEEE, PISCATAWAY, NJ, USA, 19 July 2010 (2010-07-19), pages 1108-1113, XP031761757, ISBN: 978-1-4244-7491-2 * the whole document * | 1-6 | INV. H04N19/597 H04N19/507 |

TECHNICAL FIELDS
SEARCHED (IPC)

H04N

The present search report has been drawn up for all claims

| Place of search | Date of completion of the search | Examiner |
|---|---|---|
| Munich | 24 July 2018 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)